# EUROPEAN PATENT SPECIFICATION

(11) **EP 3 454 604 B1**
(45) Date of publication and mention of the grant of the patent: **15.04.2020**
(21) Application number: 16902732.3
(22) Date of filing: 27.05.2016
(51) Int. Cl.: H04W 36/02, H04W 36/00

(54) **TRANSMISSION METHOD, BASE STATION AND TERMINAL**
ÜBERTRAGUNGSVERFAHREN, BASISSTATION UND ENDGERÄT
PROCÉDÉ DE TRANSMISSION, STATION DE BASE ET TERMINAL

(43) Date of publication of application: 13.03.2019
(73) Proprietor: Huawei Technologies Co., Ltd., Longgang District Shenzhen, Guangdong 518129 (CN)
(72) Inventor: ZHANG, Hongping, Shenzhen Guangdong 518129 (CN); DAI, Mingzeng, Shenzhen Guangdong 518129 (CN); HUANG, Qufang, Shenzhen Guangdong 518129 (CN); GUO, Yi, Shenzhen Guangdong 518129 (CN); YAN, Le, Shenzhen Guangdong 518129 (CN)
(74) Representative: Pfenning, Meinig & Partner mbB
(86) International application number: PCT/CN2016/083704
(87) International publication number: WO 2017/201743

(56) References cited:
- EP-A1- 1 903 820
- WO-A1-2010/127493
- CN-A- 101 296 485
- CN-A- 101 933 253
- US-A1- 2010 216 471
- ZTE CORPORATION: "Email discussion on solution 2 family", 3GPP DRAFT; R2-163863, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160411 - 20160415 22 May 2016 (2016-05-22), XP051105253, Retrieved from the Internet: URL:http://www.3gpp.org/ftp/Meetings_3GPP_ SYNC/RAN2/Docs/ [retrieved on 2016-05-22]
- NTT DOCOMO ET AL: "Status exchange during inter-eNB handover", 3GPP DRAFT; R2-072698, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135486, [retrieved on 2007-06-22]
- HUAWEI ET AL: "Remaining issues on Solution 2", 3GPP DRAFT; R2-164940 REMAINING ISSUES ON SOLUTION 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126606, Retrieved from the Internet: URL:http://www.3gpp.org/ftp/Meetings_3GPP_ SYNC/RAN2/Docs/ [retrieved on 2016-08-21]

## Description

### TECHNICAL FIELD

Embodiments of the present invention relate to the communications field, and more specifically, to a transmission method, a base station, and a terminal.

### BACKGROUND

In a communications system, a connection is maintained between user equipments and a base station to implement communication between the user equipments.

A Long Term Evolution (Long Term Evolution, "LTE" for short)/Long Term Evolution-Advanced (Long Term Evolution-Advanced, "LTE-A" for short) system is used as an example. User equipment (User Equipment, "UE" for short) and an evolved Node B (Evolutional Node B, "eNB or e-NodeB" for short) maintain communication. When UE moves out of coverage of the evolved Node B, or the evolved Node B cannot ensure service provisioning to the UE or service quality deteriorates, a handover procedure may be triggered. In this case, an evolved Node B before handover may be referred to as a source base station, and a base station after handover may be referred to as a target base station.

In the prior art, the following two handover manners are usually used.

In a first manner, when determining to perform handover, the source base station stops transmitting uplink and downlink user data with the UE. The target base station starts to transmit user data with the UE only after handover is completed. Therefore, in a handover process, the UE and the base station interrupt user data transmission, and the user data transmission is not recovered until the target base station is accessed. The method deteriorates user experience in a delay-sensitive service, and consequently application of a delay-sensitive service to an LTE system is limited.

In a second manner, in a handover process, the UE still maintains transmission of user data with the source base station. The UE is disconnected from the source base station only after the UE is successfully switched to the target base station, to reduce or avoid interruption of user data transmission that is caused by a handover process.

For instance, ZTE Corporation: Email discussion on solution 2 family; 3GPP TSG-RAN WG2 Meeting #94; Nanjing China, 11-15 April, 2006; (R2-163863); describes that, after receiving the handover command, the UE does not execute handover immediately but communicates with the source eNB before some pre-defined event. NTTT DoCoMo, Inc.: Status exchange during inter-eNB handover; 3GPP TSG-RAN WG2 Meeting #58bis; Orlando, USA; 25 - 29 June 2007; (R2-072698); proposes that the trigger to transmit Handover Command can also be used to trigger RLC STATUS reporting so that the UE can recieive feedback of all the UL RLC PDUs it has transmitted before handover started.

However, the prior art lacks a specific mechanism that can improve effectiveness of user data transmission between UE and a base station to improve user experience in a handover process.

### SUMMARY

A handover process in embodiments of the present invention may be applied to a single carrier scenario, a cell aggregation scenario in a base station, and a dual connectivity scenario. For example, the single carrier scenario is used as an example. When handover occurs, a terminal maintains a connection to a serving cell. For another example, the dual connectivity scenario is used as an example. When handover occurs, a terminal is connected to at least two base stations. For another example, the cell aggregation scenario in a base station is used as an example. When handover occurs, a terminal is connected to at least two cells of a same base station.

The embodiments of the present invention relate to a transmission method for inter-base station handover, and are also applicable to a transmission method for intra-base station handover. A difference lies in that the transmission method for intra-base station handover does not involve a source base station and a target base station, and instead relates to handover between different cells of a same base station. Based on a handover process, the transmission method for intra-base station handover can better omit signaling interaction between the source base station and the target base station than the transmission method for inter-base station handover, thereby reducing more system overheads.

In the handover process in the embodiments of the present invention, the source base station can maintain user data transmission between the source base station and the terminal. The user data transmission may be, for example, transmission (uplink transmission for short below) of uplink user data sent by the terminal to the source base station, and/or transmission (downlink transmission for short below) of downlink user data sent by the source base station to the terminal. The maintaining the user data transmission may be understood as that in the handover process, the source base station and the terminal perform the user data transmission within a time period, and the base station and the terminal stop the user data transmission after the time period.

In the embodiments of the present invention, when maintaining of the user data transmission between the source base station and the terminal is stopped, the source base station sends a first status report to the terminal, where the first status report is used to indicate, to the terminal, a status of receiving uplink data of the terminal by the source base station.

In the embodiments of the present invention, when the terminal has interrupted or is to interrupt a connection to the source base station, the terminal sends a second status report to the source base station, where the second status report is used to indicate, to the source base station, a status of receiving downlink data by the terminal.

The embodiments of the present invention provide a transmission method, a base station, and a terminal, to effectively improve user data transmission efficiency.

According to a first aspect, a transmission method is provided. The method includes:
sending, by a source base station, a handover command to a terminal, where the handover command is used to trigger a process of handing over the terminal from the source base station to a target base station, and the source base station maintains user data transmission with the terminal; and
in the handover process, when maintaining of the user data transmission between the source base station and the terminal is stopped, sending, by the source base station, a first status report to the terminal, where the first status report is used to indicate, to the terminal, a status of receiving uplink data of the terminal by the source base station.

With reference to the first aspect, in a possible implementation of the first aspect, the method further includes:
in the handover process, receiving, by the source base station, an access indication sent by the target base station, where the access indication is used to indicate that the terminal has successfully accessed the target base station, where
the in the handover process, when the source base station stops the user data transmission with the terminal, sending, by the source base station, a first status report to the terminal specifically includes:
   in the handover process, when the source base station receives the access indication sent by the target base station, sending, by the source base station, the first status report to the terminal.

With reference to the first aspect and the foregoing possible implementation, in a possible implementation of the first aspect, the method further includes:
in the handover process, receiving, by the source base station, a handover indication sent by the terminal, where the handover indication is used to indicate that the terminal has interrupted or is to interrupt a connection to the source base station, where
the in the handover process, when maintaining of the user data transmission between the source base station and the terminal is stopped, sending, by the source base station, a first status report to the terminal specifically includes:
   in the handover process, when the source base station receives the handover indication sent by the terminal, sending, by the source base station, the first status report to the terminal.

Therefore, in the transmission method, once the user data transmission between the source base station and the terminal is stopped in the handover process, the source base station sends the first status report to the terminal in time, and the terminal can learn earlier, based on the received first status report, uplink data that has been successfully received by the source base station. Therefore, the terminal no longer sends the same uplink data to the target base station, thereby improving uplink data transmission efficiency.

With reference to the first aspect and the foregoing possible implementations, in a possible implementation of the first aspect, after the receiving, by the source base station, a handover indication sent by the terminal, the method further includes:
receiving, by the source base station, a second status report sent by the terminal, where the second status report is used to indicate, to the source base station, a status of receiving downlink data by the terminal.

With reference to the first aspect and the foregoing possible implementations, in a possible implementation of the first aspect, after the sending, by the source base station, the first status report to the terminal, the method further includes:
sending, by the source base station, sequence number status transfer information to the target base station, where the sequence number status transfer information is used to indicate, to the target base station, a status of obtaining uplink data of the terminal by the source base station; and
forwarding, by the source base station, the obtained uplink data of the terminal to the target base station.

With reference to the first aspect and the foregoing possible implementations, in a possible implementation of the first aspect, based on the second status report sent by the terminal and received by the source base station, the sequence number status transfer information is further used to indicate, to the target base station, a status of sending downlink data to the terminal by the source base station.

In this embodiment of the present invention, based on the second status report, the source base station can indicate more accurately, to the target base station, the status of sending downlink data to the terminal by the source base station. Subsequently, downlink data forwarded by the target base station to the terminal does not include downlink data of the source base station that has been successfully received by the terminal, thereby further improving downlink data transmission efficiency.

With reference to the first aspect and the foregoing possible implementations, in a possible implementation of the first aspect, the first status report or the second status report is any one of the following:
a Radio Link Control (RLC) status report; or
a Packet Data Convergence Protocol (PDCP) status report.

With reference to the first aspect and the foregoing possible implementations, in a possible implementation of the first aspect, the RLC status report indicates: a sequence number of a next piece of uplink data not received by the source base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
a sequence number of a first piece of uplink data lost by the source base station and a sequence number that starts from the sequence number and that is of uplink data not received; or
a sequence number of a next piece of downlink data not received by the terminal and a sequence number that starts from the sequence number and that is of downlink data not received.

Therefore, the transmission method can effectively improve user data transmission efficiency, reduce processing load of the base station, and reduce system signaling overheads.

According to a second aspect, a transmission method is provided. The method includes:
receiving, by a terminal, a handover command sent by a source base station;
based on the handover command, triggering, by the terminal, a process of handing over from the source base station to a target base station, where the source base station maintains user data transmission with the terminal; and
in the handover process, when maintaining of the user data transmission between the source base station and the terminal is stopped, receiving, by the terminal, a first status report sent by the source base station, where the first status report is used to indicate, to the terminal, a status of receiving uplink data of the terminal by the source base station.

With reference to the second aspect, in a possible implementation of the second aspect, the in the handover process, when the source base station stops the user data transmission with the terminal, receiving, by the terminal, a first status report sent by the source base station specifically includes:
in the handover process, when the source base station receives an access indication sent by a target base station, receiving, by the terminal, the first status report sent by the source base station, where
the access indication is used to indicate, to the source base station, that the terminal has successfully accessed the target base station.

With reference to the second aspect and the foregoing possible implementation, in a possible implementation of the second aspect, the method further includes:
in the handover process, sending, by the terminal, a handover indication to the source base station, where the handover indication is used to indicate that the terminal has interrupted or is to interrupt a connection to the source base station, where
the in the handover process, when maintaining of the user data transmission between the source base station and the terminal is stopped, receiving, by the terminal, a first status report sent by the source base station specifically includes:
   in the handover process, receiving, by the terminal based on the handover indication sent by the terminal, the first status report sent by the source base station.

With reference to the second aspect and the foregoing possible implementations, in a possible implementation of the second aspect, the method further includes:
sending, by the terminal, a second status report to the source base station, where the second status report is used to indicate, to the source base station, a status of receiving downlink data by the terminal.

With reference to the second aspect and the foregoing possible implementations, in a possible implementation of the second aspect, the first status report or the second status report is any one of the following:
a Radio Link Control (RLC) status report; or
a Packet Data Convergence Protocol (PDCP) status report.

With reference to the second aspect and the foregoing possible implementations, in a possible implementation of the second aspect,
the RLC status report indicates:
a sequence number of a next piece of uplink data not received by the source base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
   a sequence number of a first piece of uplink data lost by the source base station and a sequence number that starts from the sequence number and that is of uplink data not received; or
   a sequence number of a next piece of downlink data not received by the terminal and a sequence number that starts from the sequence number and that is of downlink data not received.

In the transmission method, once the user data transmission between the source base station and the terminal is stopped in the handover process, the source base station sends the first status report to the terminal in time, and the terminal can learn earlier, based on the received first status report, uplink data that has been successfully received by the source base station. Therefore, the terminal no longer sends the same uplink data to the target base station, thereby improving uplink data transmission efficiency.

In addition, based on the second status report, the source base station can indicate more accurately, to the target base station, the status of sending downlink data to the terminal by the source base station. Subsequently, downlink data forwarded by the target base station to the terminal does not include downlink data of the source base station that has been successfully received by the terminal, thereby further improving downlink data transmission efficiency.

Therefore, the transmission method can effectively improve user data transmission efficiency, reduce processing load of the base station, and reduce system signaling overheads.

According to a third aspect, a base station is provided. The base station includes:
a sending unit, configured to send a handover command to a terminal, where the handover command is used to trigger a process of handing over the terminal from the base station to a target base station; and
a processing unit, configured to maintain user data transmission between the base station and the terminal, where
the sending unit is further configured to: in the handover process, when maintaining of the user data transmission between the base station and the terminal is stopped, send a first status report to the terminal, where the first status report is used to indicate, to the terminal, a status of receiving uplink data of the terminal by the base station.

With reference to the third aspect, in a possible implementation of the third aspect, the base station further includes:
a receiving unit, configured to: in the handover process, receive an access indication sent by the target base station, where the access indication is used to indicate that the terminal has successfully accessed the target base station, where
the sending unit is specifically configured to:
   in the handover process, when the receiving unit receives the access indication sent by the target base station, send the first status report to the terminal.

With reference to the third aspect and the foregoing possible implementation, in a possible implementation of the third aspect, the base station further includes:
a receiving unit, configured to: in the handover process, receive a handover indication sent by the terminal, where the handover indication is used to indicate that the terminal has interrupted or is to interrupt a connection to the base station, where
the sending unit is specifically configured to: in the handover process, when the receiving unit receives the handover indication sent by the terminal, send the first status report to the terminal.

With reference to the third aspect and the foregoing possible implementations, in a possible implementation of the third aspect, after receiving the handover indication sent by the terminal, the receiving unit is further configured to:
receive a second status report sent by the terminal, where the second status report is used to indicate, to the base station, a status of receiving downlink data by the terminal.

With reference to the third aspect and the foregoing possible implementations, in a possible implementation of the third aspect, after sending the first status report to the terminal, the sending unit is further configured to:
send sequence number status transfer information to the target base station, where the sequence number status transfer information is used to indicate, to the target base station, a status of obtaining uplink data of the terminal by the base station; and
forward the obtained uplink data of the terminal to the target base station.

With reference to the third aspect and the foregoing possible implementations, in a possible implementation of the third aspect, based on the second status report sent by the terminal and received by the receiving unit, the sequence number status transfer information is further used to indicate, to the target base station, a status of sending downlink data to the terminal by the base station.

With reference to the third aspect and the foregoing possible implementations, in a possible implementation of the third aspect, the first status report or the second status report is any one of the following:
a Radio Link Control (RLC) status report; or
a Packet Data Convergence Protocol (PDCP) status report.

With reference to the third aspect and the foregoing possible implementations, in a possible implementation of the third aspect, the RLC status report indicates:
a sequence number of a next piece of uplink data not received by the base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
   a sequence number of a first piece of uplink data lost by the base station and a sequence number that starts from the sequence number and that is of uplink data not received; or
   a sequence number of a next piece of downlink data not received by the terminal and a sequence number that starts from the sequence number and that is of downlink data not received.

Therefore, this can effectively improve user data transmission efficiency, reduce processing load of the base station, and reduce system signaling overheads.

According to a fourth aspect, a terminal is provided. The terminal includes:
a receiving unit, configured to receive a handover command sent by a source base station; and
a processing unit, configured to: based on the handover command, trigger a process of handing over from the source base station to a target base station, and maintain user data transmission with the source base station, where
the receiving unit is further configured to: in the handover process, when maintaining of the user data transmission between the source base station and the terminal is stopped, receive a first status report sent by the source base station, where the first status report is used to indicate, to the terminal, a status of receiving uplink data of the terminal by the source base station.

With reference to the fourth aspect, in a possible implementation of the fourth aspect, in the handover process, when maintaining of the user data transmission between the source base station and the terminal is stopped, the receiving unit is specifically configured to:
in the handover process, when the source base station receives an access indication sent by the target base station, receive a first status report sent by the source base station, where
the access indication is used to indicate, to the source base station, that the terminal has successfully accessed the target base station.

With reference to the fourth aspect and the foregoing possible implementation, in a possible implementation of the fourth aspect, the terminal further includes a sending unit, configured to: in the handover process, send a handover indication to the source base station, where the handover indication is used to indicate that the terminal has interrupted or is to interrupt a connection to the source base station, where
in the handover process, when maintaining of the user data transmission between the source base station and the terminal is stopped, the terminal receives the first status report sent by the source base station, and the receiving unit is specifically configured to:
in the handover process, receive the first status report that is based on the handover indication and that is sent by the source base station.

With reference to the fourth aspect and the foregoing possible implementations, in a possible implementation of the fourth aspect, after sending the handover indication to the source base station, the sending unit is further configured to:
send a second status report to the source base station, where the second status report is used to indicate, to the source base station, a status of receiving downlink data by the terminal.

With reference to the fourth aspect and the foregoing possible implementations, in a possible implementation of the fourth aspect, the first status report or the second status report is any one of the following:
a Radio Link Control (RLC) status report; or
a Packet Data Convergence Protocol (PDCP) status report.

With reference to the fourth aspect and the foregoing possible implementations, in a possible implementation of the fourth aspect, the RLC status report indicates:
a sequence number of a next piece of uplink data not received by the source base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
   a sequence number of a first piece of uplink data lost by the source base station and a sequence number that starts from the sequence number and that is of uplink data not received; or
   a sequence number of a next piece of downlink data not received by the terminal and a sequence number that starts from the sequence number and that is of downlink data not received.

Therefore, this can effectively improve user data transmission efficiency, reduce processing load of the base station, and reduce system signaling overheads.

According to a fifth aspect, a transmission method is provided. The method includes:
sending, by a source base station, a handover command to a terminal, where the handover command is used to trigger a process of handing over the terminal from the source base station to a target base station; and
based on the handover command, sending, by the source base station, sequence number status transfer information to the target base station, where the sequence number status transfer information indicates a start number of downlink data that is to be allocated by the target base station.

With reference to the fifth aspect, in a possible implementation of the fifth aspect, based on the sequence number status transfer information, the target base station sends, to the terminal, downlink data obtained from a serving gateway.

With reference to the fifth aspect and the foregoing possible implementation, in a possible implementation of the fifth aspect, after the terminal has successfully accessed the target base station, the source base station forwards downlink data to the target base station, so that the target base station sends the downlink data to the terminal.

With reference to the fifth aspect and the foregoing possible implementations, in a possible implementation of the fifth aspect, after the source base station sends the handover command to the terminal, the source base station immediately sends the sequence number status transfer information to the target base station; or before the terminal triggers random access to the target base station, the source base station sends the sequence number status transfer information to the target base station.

With reference to the fifth aspect and the foregoing possible implementations, in a possible implementation of the fifth aspect, the sequence number status transfer information may be represented as at least any one of the following forms:
a count (English: count) and an offset (English: offset); or
a number of last downlink data reserved by the source base station; therefore, the target base station may select, based on the number of the last downlink data, a number of downlink data initially sent by the target base station to the terminal.

With reference to the fifth aspect and the foregoing possible implementations, in a possible implementation of the fifth aspect, after the terminal has successfully accessed the target base station, the source base station sends, to the target base station, a number of last downlink data actually sent by the source base station to the terminal.

Therefore, in the handover process, the terminal may receive, by using the source base station and the target base station, downlink data sent by the serving gateway, thereby improving transmission performance during handover and further improving user experience.

According to a sixth aspect, a base station is provided. The base station includes:
a sending unit, configured to send a handover command to a terminal, where the handover command is used to trigger a process of handing over the terminal from the source base station to a target base station; and
a processing unit, configured to generate sequence number status transfer information, where
the sending unit is further configured to: based on the handover command, send the sequence number status transfer information to the target base station, where the sequence number status transfer information indicates a start number of downlink data that is to be allocated by the target base station.

With reference to the sixth aspect, in a possible implementation of the sixth aspect, the sending unit is further configured to: after the terminal has successfully accessed the target base station, forward downlink data to the target base station, so that the target base station sends the downlink data to the terminal.

With reference to the sixth aspect and the foregoing possible implementation, in a possible implementation of the sixth aspect, the sending unit is further configured to: after the terminal has successfully accessed the target base station, forward downlink data to the target base station, so that the target base station sends the downlink data to the terminal.

With reference to the sixth aspect and the foregoing possible implementations, in a possible implementation of the sixth aspect, the sending unit is further configured to: after the terminal has successfully accessed the target base station, forward downlink data to the target base station, so that the target base station sends the downlink data to the terminal.

With reference to the sixth aspect and the foregoing possible implementations, in a possible implementation of the sixth aspect, the sending unit may be further configured to: after the terminal has successfully accessed the target base station, send, to the target base station, a number of last downlink data actually sent by the source base station to the terminal.

Therefore, in the handover process, the terminal may receive, by using the source base station and the target base station, downlink data sent by a serving gateway, thereby improving transmission performance during handover and further improving user experience.

According to a seventh aspect, a base station is provided. The base station includes a processor and a memory. The memory is configured to store an instruction, and the processor is configured to execute the instruction stored by the memory.

The processor is configured to send a handover command to a terminal, where the handover command is used to trigger a process of handing over the terminal from the base station to a target base station, where the base station maintains user data transmission with the terminal; and
the processor is further configured to: in the handover process, when maintaining of the user data transmission between the base station and the terminal is stopped, send a first status report to the terminal, where the first status report is used to indicate, to the terminal, a status of receiving uplink data of the terminal by the base station.

With reference to the seventh aspect, in a possible implementation of the seventh aspect, the base station further includes: a receiver and a transmitter. The processor executes the instruction stored by the memory, to control the receiver to receive a signal and control the transmitter to send a signal. An operation performed by the receiver and/or the transmitter is triggered by the processor.

The transmitter is configured to send the handover command to the terminal, where the handover command is used to trigger the process of handing over the terminal from the base station to the target base station, where the base station maintains the user data transmission with the terminal; and
the transmitter is further configured to: in the handover process, when maintaining of the user data transmission between the base station and the terminal is stopped, send the first status report to the terminal, where the first status report is used to indicate, to the terminal, the status of receiving uplink data of the terminal by the base station.

With reference to the seventh aspect and the foregoing possible implementation, in a possible implementation of the seventh aspect, the receiver is configured to: in the handover process, receive an access indication sent by the target base station, where the access indication is used to indicate that the terminal has successfully accessed the target base station; and
the transmitter is specifically configured to:
in the handover process, when the receiver receives the access indication sent by the target base station, send the first status report to the terminal.

With reference to the seventh aspect and the foregoing possible implementations, in a possible implementation of the seventh aspect, the receiver is configured to: in the handover process, receive a handover indication sent by the terminal, where the handover indication is used to indicate that the terminal has interrupted or is to interrupt a connection to the base station; and
the transmitter is specifically configured to:
in the handover process, when the receiver receives the handover indication sent by the terminal, send the first status report to the terminal.

With reference to the seventh aspect and the foregoing possible implementations, in a possible implementation of the seventh aspect, after receiving the handover indication sent by the terminal, the receiver is further configured to:
receive a second status report sent by the terminal, where the second status report is used to indicate, to the base station, a status of receiving downlink data by the terminal.

With reference to the seventh aspect and the foregoing possible implementations, in a possible implementation of the seventh aspect, after sending the first status report to the terminal, the transmitter is further configured to:
send sequence number status transfer information to the target base station, where the sequence number status transfer information is used to indicate, to the target base station, a status of obtaining uplink data of the terminal by the base station; and
forward the obtained uplink data of the terminal to the target base station.

With reference to the seventh aspect and the foregoing possible implementations, in a possible implementation of the seventh aspect, based on the second status report sent by the terminal and received by the receiver, the sequence number status transfer information is further used to indicate, to the target base station, a status of sending downlink data to the terminal by the base station.

With reference to the seventh aspect and the foregoing possible implementations, in a possible implementation of the seventh aspect, the first status report or the second status report is any one of the following:
a Radio Link Control (RLC) status report; or
a Packet Data Convergence Protocol (PDCP) status report.

With reference to the seventh aspect and the foregoing possible implementations, in a possible implementation of the seventh aspect, the RLC status report indicates:
a sequence number of a next piece of uplink data not received by the base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
   a sequence number of a first piece of uplink data lost by the base station and a sequence number that starts from the sequence number and that is of uplink data not received; or
   a sequence number of a next piece of downlink data not received by the terminal and a sequence number that starts from the sequence number and that is of downlink data not received.

Therefore, this can effectively improve user data transmission efficiency, reduce processing load of the base station, and reduce system signaling overheads.

According to an eighth aspect, a terminal is provided. The terminal includes a processor and a memory. The memory is configured to store an instruction, and the processor is configured to execute the instruction stored by the memory.

The processor is configured to receive a handover command sent by a source base station;
the processor is configured to: based on the handover command, trigger a process of handing over from the source base station to a target base station, where the source base station maintains user data transmission with the terminal; and
the processor is further configured to: in the handover process, when maintaining of the user data transmission between the source base station and the terminal is stopped, receive a first status report sent by the source base station, where the first status report is used to indicate, to the terminal, a status of receiving uplink data of the terminal by the source base station.

With reference to the eighth aspect, in a possible implementation of the eighth aspect, the terminal further includes: a receiver and a transmitter. The processor executes the instruction stored by the memory, to control the receiver to receive a signal and control the transmitter to send a signal. An operation performed by the receiver and/or the transmitter is triggered by the processor.

The receiver is configured to receive the handover command sent by the source base station; and
the processor is configured to: based on the handover command, trigger the process of handing over from the source base station to the target base station, where the source base station maintains the user data transmission with the terminal; and
the receiver is further configured to: in the handover process, when maintaining of the user data transmission between the source base station and the terminal is stopped, receive the first status report sent by the source base station, where the first status report is used to indicate, to the terminal, the status of receiving uplink data of the terminal by the source base station.

With reference to the eighth aspect and the foregoing possible implementation, in a possible implementation of the eighth aspect, in the handover process, when the source base station stops the user data transmission with the terminal, the receiver is specifically configured to:
in the handover process, when the source base station receives an access indication sent by the target base station, receive the first status report sent by the source base station, where
the access indication is used to indicate, to the source base station, that the terminal has successfully accessed the target base station.

With reference to the eighth aspect and the foregoing possible implementations, in a possible implementation of the eighth aspect, the transmitter is configured to: in the handover process, send a handover indication to the source base station, where the handover indication is used to indicate that the terminal has interrupted or is to interrupt a connection to the source base station; and
in the handover process, when maintaining of the user data transmission between the source base station and the terminal is stopped, the terminal receives the first status report sent by the source base station, and the receiver is specifically configured to:
in the handover process, receive, based on the handover indication sent by the terminal, the first status report sent by the source base station.

With reference to the eighth aspect and the foregoing possible implementations, in a possible implementation of the eighth aspect, after sending the handover indication to the source base station, the transmitter is further configured to:
send a second status report to the source base station, where the second status report is used to indicate, to the source base station, a status of receiving downlink data by the terminal.

With reference to the eighth aspect and the foregoing possible implementations, in a possible implementation of the eighth aspect, the first status report or the second status report is any one of the following:
a Radio Link Control (RLC) status report; or
a Packet Data Convergence Protocol (PDCP) status report.

With reference to the eighth aspect and the foregoing possible implementations, in a possible implementation of the eighth aspect, the RLC status report indicates:
a sequence number of a next piece of uplink data not received by the source base station and sequence numbers that are before the sequence number and that are of all uplink data not received; or
a sequence number of a next piece of downlink data not received by the terminal and sequence numbers that are before the sequence number and that are of all downlink data not received; and
the PDCP status report indicates:
   a sequence number of a first piece of uplink data lost by the source base station and a sequence number that starts from the sequence number and that is of uplink data not received; or
   a sequence number of a next piece of downlink data not received by the terminal and a sequence number that starts from the sequence number and that is of downlink data not received.

Therefore, this can effectively improve user data transmission efficiency, reduce processing load of the base station, and reduce system signaling overheads.

Based on the foregoing technical solutions, in the transmission method provided in the embodiments of the present invention, a user data transmission manner is properly adjusted in a handover process. Therefore, compared with the prior art, the method provided in the embodiments of the present invention can ensure effective user data transmission to some extent and improve transmission efficiency and user experience.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of an application scenario according to an embodiment of the present invention;
FIG. 2 is a schematic flowchart of a handover process according to an embodiment of the present invention;
FIG. 3 is a schematic flowchart of a transmission method according to an embodiment of the present invention;
FIG. 3A is another schematic flowchart of a transmission method according to an embodiment of the present invention;
FIG. 4 is still another schematic flowchart of a transmission method according to an embodiment of the present invention;
FIG. 5 is a schematic block diagram of a base station according to an embodiment of the present invention;
FIG. 6 is another schematic block diagram of user equipment according to an embodiment of the present invention;
FIG. 7 is another schematic block diagram of a base station according to an embodiment of the present invention; and
FIG. 8 is a schematic block diagram of a network device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

It should also be understood that in the embodiments of the present invention, user equipment (User Equipment, "UE" for short) may also be referred to as a terminal, a mobile station (Mobile Station, "MS" for short), a mobile terminal (Mobile Terminal), and the like. The user equipment may communicate with one or more core networks through a radio access network (Radio Access Network, "RAN" for short). For example, the user equipment may be a mobile phone (also referred to as a "cellular" phone) or a computer with a mobile terminal. For example, the user equipment may alternatively be a portable, pocket-sized, handheld, computer built-in, or in-vehicle mobile apparatus, which exchanges voice and/or data with the radio access network. This is not limited in the embodiments of the present invention, but for ease of description, the following embodiments use a terminal as an example for description.

In the embodiments of the present invention, a base station may be a base transceiver station (Base Transceiver Station, "BTS" for short) in GSM, or may be a NodeB (NodeB, "NB" for short) in WCDMA, or may be an evolved NodeB (Evolved Node B, "eNB or e-NodeB" for short) in LTE. This is not limited in the embodiments of the present invention. However, for ease of description, the following embodiments are described by using a base station as an example.

As mobile communications systems rapidly develop, mobile communications systems can provide increasingly high service quality. To maintain long-term competition advantages of the 3rd Generation Partnership Project (the 3rd Generation Partner Project, "3GPP" for short), and further improve spectrum efficiency and user throughputs of mobile communications systems, a carrier aggregation (Carrier Aggregation, "CA" for short) technology is introduced to the Long Term Evolution-Advanced (LTE-Advanced, "LTE-A" for short) standard as a new technology. In the carrier aggregation technology, user equipment (User Equipment, "UE" for short) can simultaneously perform uplink and downlink communication by using a plurality of cells, to support high speed data transmission. Carrier aggregation of a Long Term Evolution (Long Term Evolution, "LTE" for short) system may be classified into intra-base station cell aggregation, inter-base station cell aggregation, and the like. The intra-base station cell aggregation means that for UE, aggregated serving cells all belong to a same base station. Because aggregated serving cells are controlled by only one base station, intra-base station cell aggregation is relatively simple. The inter-base station cell aggregation is introduced to Release-12 (Release-12) that is being formulated, and is also referred to as dual connectivity (Dual Connectivity, "DC" for short). The DC supports carrier aggregation of a plurality of cells of two base stations, and therefore can bring better user experience for users. In an inter-base station cell aggregation technology, for a terminal, one base station is a master base station (Master eNB, "MeNB" for short), and the other base station is a secondary base station (Secondary eNB, "SeNB" for short). The primary base station is responsible for more control functions and is usually a macro base station, and the secondary base station is usually a micro base station.

A handover process in the embodiments of the present invention may be applied to a single carrier scenario, a cell aggregation scenario in a base station, and a dual connectivity scenario. For example, in the single carrier scenario, when handover occurs, a terminal maintains a connection to one serving cell. For another example, the dual connectivity scenario is used as an example. When handover occurs, a terminal is connected to at least two base stations. For another example, the cell aggregation scenario in a base station is used as an example. When handover occurs, a terminal is connected to at least two cells of a same base station.

This is not limited in the embodiments of the present invention. To be specific, the embodiments of the present invention are also applicable to intra-base station handover and inter-base station handover. However, for ease of description, the following embodiments use inter-base station handover as an example for description.

For ease of understanding and describing an uplink data transmission method and user equipment provided in the embodiments of the present invention, the following first describes an application scenario of the embodiments of the present invention.

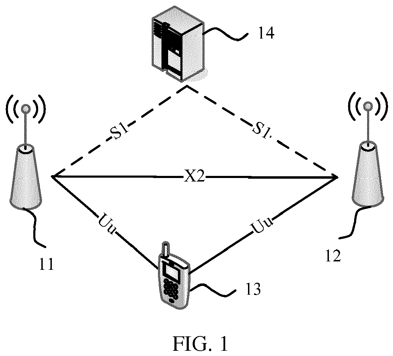

FIG. 1 is a schematic diagram of an LTE system to which an embodiment of the present invention is applied. As shown in FIG. 1, in the LTE system, a base station 11 and a base station 12 are responsible for radio resource management, connection control, cell management and scheduling, and the like of a radio interface. The base station 11 and the base station 12 may be in communication connection with each other by using an X2 interface, and may be in communication connection separately with a mobility management entity (Mobility Management Entity, "MME" for short)/a serving gateway (Serving GateWay, "SGW" for short) 14 by using an S1 interface. In addition, the base station 11 and the base station 12 may be in communication connection with a terminal 13 by using a Uu interface.

It should be understood that this embodiment of the present invention uses the LTE system as an example only for description, but the present invention is not limited thereto. Technical solutions in the embodiments of the present invention may alternatively be applied to another communications system, for example, an LTE-A system. It should be further understood that the LTE system shown in FIG. 1 uses one terminal and two base stations as an example for description, but the LTE system may further include more terminals and base stations.

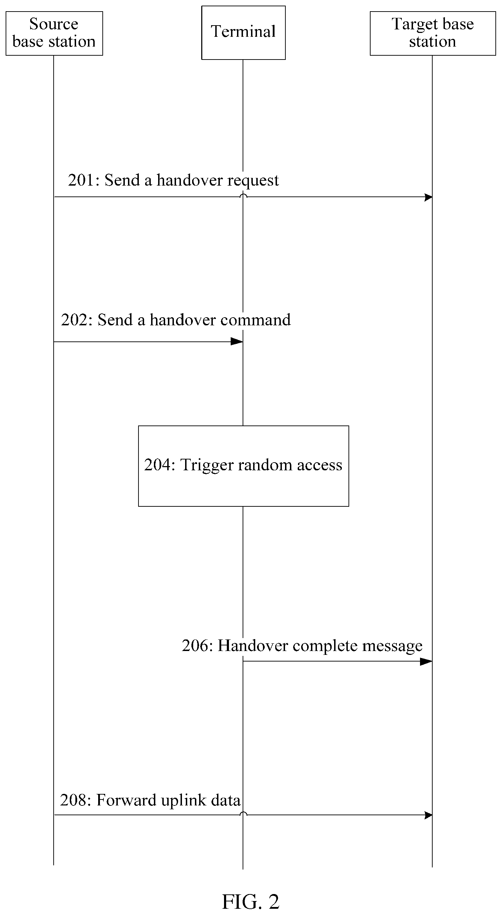

FIG. 2 shows a basic procedure of a handover process. This example includes a terminal, a source base station, and a target base station. Steps of the handover process are as follows:
201: The source base station sends a handover request (English: handover request, HO request for short) to the target base station.

It may be understood that the handover request may request the target base station to accept handover of the terminal.

Optionally, the target base station sends a handover request acknowledgement (English: handover request acknowledge, HO request ACK for short) to the source base station based on the handover request.

202: The source base station sends a handover command (English: handover command, HO command for short) to the terminal.

It may be understood that the handover command may be used to trigger the terminal to be handed over to the target base station.

206: The terminal sends handover complete information to the target base station.

It may be understood that the terminal may obtain an uplink resource by using a random access process, and send the handover complete information to the target base station.

For example, the handover process may further include:
204: The terminal triggers random access (English: random access) to the target base station.

It may be understood that the random access is used by the terminal to successfully access the target base station and implement handover to the target base station.

In this embodiment of the present invention, in the random access, the terminal may finally access the target base station in a contention-based or non-contention-based manner.

Contention-based random access is used as an example. The terminal sends a random access preamble (English: random access preamble) to the target base station. The target base station returns a random access response (English: random access response) to the terminal based on the random access preamble, where the random access response includes an uplink grant (English: uplink grant) and timing alignment information (English: timing alignment information) allocated to the terminal. The timing alignment information is used to implement uplink alignment between the terminal and the target base station.

It may be understood that the terminal may obtain an uplink resource by using the uplink grant in the random access response, and send the handover complete information to the target base station.

In this embodiment of the present invention, the uplink resource may alternatively be obtained in any one of the following manners:
periodically allocating, by the target base station, an uplink resource to the terminal; or
sending, by the source base station, an uplink resource to the terminal by adding the uplink resource to the handover command.

The following first describes a scenario in which the terminal sends uplink data to a network, and the network may be understood as including at least the source base station and/or the target base station.

Uplink data is used as an example, and the handover process may further include:
208: The source base station forwards, to the target base station, uplink data sent by the terminal.

It may be understood that in a downlink data transmission process, the source base station may forward downlink data to the target base station, where the source base station cannot determine whether the terminal has received the downlink data.

In this embodiment of the present invention, in any time period before 201 to 204, 201 to 206, or 201 to 208, the terminal and the source base station may maintain communication, to be specific, uplink and downlink user data may be transmitted between the terminal and the source base station. From 208, the target base station may obtain the uplink data of the terminal in the following two manners:
Manner 1: The source base station forwards the uplink data of the terminal, and the target base station obtains the uplink data, where the uplink data may be uplink data obtained by the source base station from the terminal before handover or during handover.
Manner 2: The target base station directly schedules the terminal, for example, the target base station instructs the terminal to send uplink data to the target base station. The terminal may autonomously determine uplink data and send the uplink data to the target base station. The uplink data may be uplink data that is sent by the terminal to the source base station before handover or during handover, but whose acknowledgement (English: acknowledge) fed back by the source base station has not been received by the terminal yet.

Specifically, in a general communication procedure, for example, in uplink, after the terminal sends uplink data to the base station, if the base station correctly receives the uplink data, the base station notifies the terminal by using an acknowledgement mode (English: acknowledge mode). When the terminal receives acknowledgement information (English: acknowledge, ACK for short) sent by the base station, the terminal continues new uplink transmission. When the terminal receives negative acknowledgement information (English: non-acknowledge, NACK for short) sent by the base station, the terminal performs uplink retransmission.

However, because ACK/NACK transmission is unreliable, ACK/NACK transmission cannot be used to finally determine whether data transmission is successful. Therefore, for example, in uplink, the base station, as a receiving party, aperiodically sends a status report to the terminal in a transmission process, to indicate data that has been received and data that has not been received yet to the terminal. Because the status report is aperiodically sent, whether uplink and downlink user data transmitted between the source base station and the terminal is correctly received cannot be notified to a peer end in real time by using the status report. Therefore, although the terminal and the source base station maintain user data communication in a handover process, neither of the terminal and the source base station can learn in real time whether a peer end correctly performs receiving.

In this case, the terminal may directly transmit, to the target base station in manner 2, uplink data that has been received by the source base station but whose acknowledgement has not been fed back to the terminal yet, and the uplink data may also be forwarded by the source base station to the target base station in manner 1. As can be learned, based on the foregoing two manners, the terminal and the source base station repeatedly transmit the uplink data of the terminal to the target base station, causing redundancy of the uplink data of the terminal obtained by the target base station, and affecting uplink data transmission efficiency.

To resolve the foregoing technical problem, an embodiment of the present invention provides a transmission method, to effectively improve user data transmission efficiency, reduce processing load of the base station, and reduce system signaling overheads.

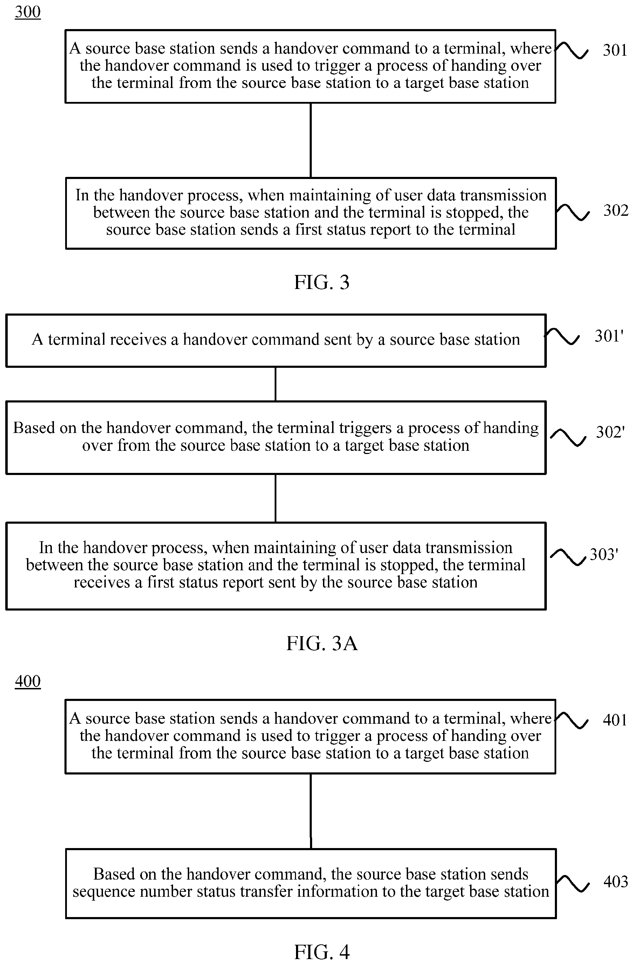

FIG. 3 shows a transmission method 300 according to an embodiment of the present invention. Specifically, the method 300 is performed by a source base station, and the method 300 includes:
301: The source base station sends a handover command to a terminal, where the handover command is used to trigger a process of handing over the terminal from the source base station to a target base station.
302: In the handover process, when maintaining of the user data transmission between the source base station and the terminal is stopped, the source base station sends a first status report to the terminal, where the first status report is used to indicate, to the terminal, a status of receiving uplink data of the terminal by the source base station.

In this embodiment of the present invention, a step/operation of sending data to the terminal by the source base station may be understood as a step/operation of receiving, by the terminal, data sent by the source base station. As shown in FIG. 3A, 301 and 302 may be described as follows from the perspective of the terminal:
301': A terminal receives a handover command sent by the source base station.
302': Based on the handover command, the terminal triggers a process of handing over from the source base station to a target base station.
303': In the handover process, when maintaining of the user data transmission between the source base station and the terminal is stopped, the terminal receives the first status report sent by the source base station, where the first status report is used to indicate, to the terminal, a status of receiving uplink data of the terminal by the source base station.

In this embodiment of the present invention, signaling and data transmission between the terminal and the base station may all be understood from the perspective of a sending party or a receiving party, and details are not described below again. For example, in downlink, a sending party is a base station and a receiving party is a terminal. For example, in uplink, a sending party is a terminal and a receiving party is a base station.

Optionally, a handover process may be understood as starting from sending, by the source base station, the handover command to the terminal, and ending with forwarding, by the source base station, user data to the target base station. It may be understood that in the handover process, the source base station may maintain the user data transmission with the terminal within a time period, and subsequently the source base station and the terminal may stop the user data transmission.

In this embodiment of the present invention, a precondition under which the source base station sends the handover command to the terminal may be that the source base station has sent a handover request to the target base station and has received a handover response of the target base station.

It may be understood that the handover command may include mobility control information (English: mobility control information) carried by a Radio Resource Control (English: radio resource control, RRC for short) message.

In this embodiment of the present invention, that the source base station and the terminal change from maintaining the user data transmission to stopping the user data transmission may be understood as that in the handover process, the source base station maintains uplink and downlink user data communication with the terminal within a time period. However, from a subsequent time point, the source base station stops the uplink and downlink user data transmission with the terminal. Alternatively, the source base station presets a timer, and when the timer expires, the source base station considers that the terminal is to interrupt a connection to the source base station. In this embodiment of the present invention, a specific manner of setting maintaining and stopping of user data communication between the source base station and the terminal is not limited.

In this embodiment of the present invention, the first status report may indicate uplink data received by the source base station from the terminal, and/or uplink data that cannot be received by the source base station from the terminal.

For example, the first status report may indicate a next piece of uplink data of the terminal that is not received by the source base station; or indicate a first piece of uplink data lost by the source base station. For another example, the first status report may indicate last uplink data of the terminal that is received by the source base station; or indicate last uplink data not lost by the source base station.

It may be understood that uplink data indicated by the first status report may be represented as a sequence number (English: sequence number, SN for short) or a count (English: count) corresponding to the uplink data. When the first status report is a Radio Link Control (English: radio link control, RLC for short) status report, the RLC status report indicates a sequence number of a next piece of uplink data not received by the source base station and sequence numbers that are before the sequence number and that are of all uplink data not received. When the first status report is a Packet Data Convergence Protocol (English: Packet Data Convergence Protocol, PDCP for short) status report, the PDCP status report indicates a sequence number of a first piece of uplink data lost by the source base station and a sequence number that starts from the sequence number and that is of uplink data not received. For example, the source base station sends the RLC status report, and the terminal can learn, based on the received RLC status report and a correspondence between an RLC sequence number and a PDCP sequence number, uplink data (for example, a PDCP data packet) that has been successfully received by the source base station. For another example, the source base station sends the PDPC status report, and the terminal may directly learn, based on the first status report, uplink data (for example, a PDCP data packet) that has been successfully received by the source base station.

It may be understood that in transmission on an air interface, for example, communication between the terminal and a base station, a sequence number corresponding to user data is more commonly used. In transmission on an X2 interface, for example, communication between the source base station and the target base station, a count corresponding to user data is more commonly used. A specific indication or identifier of the uplink data in the first status report is not limited in the present invention.

In this embodiment of the present invention, the method may further include: in the handover process, receiving, by the source base station, an access indication sent by the target base station, where the access indication is used to indicate that the terminal has successfully accessed the target base station.

For example, after contention-based/non-contention-based random access is triggered based on a random access preamble sent by the terminal to the target base station, the terminal obtains, by using a random access response sent by the target base station, an uplink resource that can be used to send a handover complete message and timing alignment information for implementing uplink alignment with the target base station. The terminal sends the handover complete message to the target base station. In this case, the target base station may send, to the source base station, the access indication indicating that the terminal has successfully accessed, indicating that the terminal completes handover from the source base station to the target base station.

In this embodiment of the present invention, the method may further include: in the handover process, receiving, by the source base station, a handover indication sent by the terminal, where the handover indication is used to indicate that the terminal has interrupted or is to interrupt a connection to the source base station.

It may be understood that the terminal usually sends the handover indication to the source base station before the terminal initiates a random access process. After the terminal sends the handover indication to the source base station, the terminal may interrupt the connection to the source base station, and perform random access to the target base station. Specifically, after the terminal sends the handover indication, in one aspect, the terminal no longer sends uplink data to the source base station; in another aspect, the terminal notifies the source base station that the terminal no longer receives downlink data sent by the source base station, so that the source base station stops sending downlink data to the terminal.

It may be understood that a condition under which the source base station sends the first status report to the terminal may be any one of the following:
condition a: in the handover process, when the source base station receives the access indication sent by the target base station, the source base station sends the first status report to the terminal;
condition b: in the handover process, when the source base station receives the handover indication sent by the terminal, the source base station sends the first status report to the terminal; and
condition c: when a timer of the source base station expires, the source base station sends the first status report to the terminal.

Based on condition c, the source base station may start a timer after sending the handover command. After the timer expires, the source base station considers that the terminal is to interrupt the connection to the source base station, and the source base station sends the first status report to the terminal. Optionally, the source base station periodically sends the first status report to the terminal. Duration of the cycle timer may be autonomously determined by the base station. For example, the source base station estimates duration after which the terminal is to interrupt the connection to the source base station, and uses the duration as the duration of the timer. For example, the duration of the cycle timer may be 10 milliseconds, and after 10 milliseconds, the source base station is triggered to send the first status report to the terminal.

In this embodiment of the present invention, after the sending, by the source base station, a first status report to the terminal, the method may further include:
sending, by the source base station, sequence number status transfer (English: sequence status transfer, SN status transfer for short) information to the target base station, where the SN status transfer information is used to indicate, to the target base station, a status of receiving uplink data of the terminal by the source base station; and
forwarding, by the source base station, the obtained uplink data of the terminal to the target base station.

In this embodiment of the present invention, the sequence number status transfer information may indicate uplink data received by the source base station from the terminal, and/or uplink data that cannot be received by the source base station from the terminal.

For example, the sequence number status transfer information may indicate a next piece of uplink data of the terminal that is not received by the source base station; or indicate a first piece of uplink data lost by the source base station. For another example, the first status report may indicate last uplink data of the terminal that is received by the source base station; or indicate last uplink data not lost by the source base station.

It may be understood that the sequence number status transfer information may include a sequence number of uplink data first lost by the source base station and a sequence number that starts from the sequence number and that is of uplink data not received.

It may be understood that the sequence number status transfer information is used by the source base station to notify the target base station of a status of obtaining uplink data from the terminal by the source base station. Subsequently, the uplink data is forwarded, and the source base station sends, to the target base station, the uplink data that has been obtained from the terminal. The terminal may have sent the uplink data to the source base station, but the terminal has not received an acknowledgement of the source base station yet. In this period, the target base station directly schedules the uplink data of the terminal, to trigger the terminal to send the uplink data to the target base station again. In the prior art, the source base station and the terminal repeatedly send the same uplink data to the target base station.

In this embodiment of the present invention, once the user data transmission between the source base station and the terminal is stopped in the handover process, the source base station sends the first status report to the terminal in time, and the terminal can learn earlier, based on the received first status report, uplink data that has been successfully received by the source base station. Therefore, the terminal no longer sends the same uplink data to the target base station, thereby improving uplink data transmission efficiency.

Optionally, after the receiving, by the source base station, a handover indication sent by the terminal, the method further includes:
receiving, by the source base station, a second status report sent by the terminal, where the second status report is used to indicate, to the source base station, a status of receiving downlink data by the terminal.

Optionally, when the terminal is to interrupt the connection to the source base station, the terminal sends the second status report to the source base station. The source base station receives the second status report sent by the terminal, where the second status report is used to indicate, to the source base station, a status of receiving downlink data by the terminal.

Optionally, the second status report may be an RLC status report or a PDCP status report.

It may be understood that the source base station can learn, by using the second status report, whether the terminal successfully receives downlink data sent by the source base station. The second status report may include any one of the following:
when the second status report is the RLC status report, a sequence number of a next piece of downlink data not received by the terminal and sequence numbers that are before the sequence number and that are of all downlink data not received; or
when the second status report is the PDCP status report, a sequence number of first downlink data lost by the terminal and a sequence number that starts from the sequence number and that is of downlink data not received.

Optionally, based on the second status report, the sequence number status transfer information sent by the source base station to the target base station is further used to indicate, to the target base station, a status of sending downlink data to the terminal by the source base station.

In this embodiment of the present invention, based on the second status report, the source base station can indicate more accurately, to the target base station, the status of sending downlink data to the terminal by the source base station. Subsequently, downlink data forwarded by the target base station to the terminal does not include downlink data of the source base station that has been successfully received by the terminal, thereby further improving downlink data transmission efficiency.

It may be understood that although the embodiments of the present invention relate to a transmission method for an inter-base station handover process, the embodiments of the present invention are also applicable to a transmission method for an intra-base station handover process. A difference lies in that the transmission method for intra-base station handover does not involve a source base station and a target base station, and instead relates to handover between different cells of a same base station. Therefore, based on a handover process, the transmission method for intra-base station handover can better omit signaling interaction between a source base station and a target base station than the inter-base station transmission method, thereby reducing more system overheads.

Another embodiment of the present invention mainly describes a scenario of sending downlink data to a terminal by a network. The network may include at least a source base station and/or a target base station.

In this embodiment, with reference to the description in FIG. 2, in any time period before 201 to 204, 201 to 206, or 201 to 208, the terminal and the source base station may maintain user data communication.

In the prior art, after 208, the target base station starts to send downlink data to the terminal. Therefore, in downlink, in the handover process, the terminal can obtain downlink data only from the source base station, and cannot obtain downlink data from the target base station, reducing a throughput of the terminal and affecting downlink data transmission efficiency in the handover process.

To resolve the foregoing technical problem, an embodiment of the present invention provides a downlink data transmission method, to effectively improve downlink data transmission efficiency in a handover process.

FIG. 4 shows a downlink data transmission method 400 according to another embodiment of the present invention. For example, the transmission method 400 may be performed by a source base station, and the method 400 includes:
401: The source base station sends a handover command to a terminal, where the handover command is used to trigger a process of handing over the terminal from the source base station to a target base station.
403: Based on the handover command, the source base station sends sequence number status transfer information to the target base station, where the sequence number status transfer information indicates a start number of downlink data that is to be allocated by the target base station.

It may be understood that for 401, refer to related descriptions in the embodiment in FIG. 3, and details are not described herein again.

In an embodiment of the present invention, the method further includes:
in the handover process, based on the sequence number status transfer information, sending, by the target base station to the terminal, downlink data obtained from a serving gateway.

Therefore, in the handover process, the terminal may separately obtain, from the source base station and the target base station, downlink data sent by the serving gateway, thereby improving downlink transmission efficiency.

In this embodiment of the present invention, the method may further include:
after the terminal has successfully accessed the target base station, forwarding, by the source base station, downlink data to the target base station, so that the target base station sends the downlink data to the terminal.

Specifically, the forwarded downlink data may be downlink data not sent by the source base station to the terminal yet.

Forwarding downlink user data to the target base station by the source base station is delayed, to further prevent the target base station from repeatedly sending, to the terminal in the handover process, downlink data that has been successfully obtained by the terminal from the source base station, thereby further improving downlink data transmission efficiency.

In this embodiment of the present invention, the source base station sends the sequence number status transfer information to the target base station based on the handover command. Specifically, any one of the following conditions may be satisfied:
condition 1: after the source base station sends the handover command to the terminal, the source base station immediately sends the sequence number status transfer information to the target base station; or
condition 2: before the terminal triggers random access to the target base station, the source base station sends the sequence number status transfer information to the target base station.

Specifically, the sequence number status transfer information may be represented in at least any one of the following forms:
Form 1: a count (English: count) and an offset (English: offset).

It may be understood that the count is used to indicate a next number not allocated by the source base station. The offset is used to indicate a number reserved by the source base station to send downlink data by the source base station. Therefore, the target base station may select, based on the count and the offset, a number of downlink data first sent by the target base station to the terminal. Specifically, because the sequence number status transfer information needs to indicate, to the target base station, a start value of downlink data that the target base station is to transmit to the terminal, the start value may be a number allocated by the target base station starting from a specified value. Because in the handover process, the source base station further needs to continue to allocate a number of downlink data sent to the terminal, the source base station further reserves a quantity of (assuming that a value of the quantity is the offset) numbers, that is, the source base station reserves and uses a segment of numbers. Therefore, the SN status transfer sent by the source base station to the target base station may carry the quantity of numbers reserved by the source base station and the next number to be allocated by the source base station. When the target base station needs to send downlink data to the terminal, the target base station allocates a number to the downlink data, for example, performs allocation starting from a sum of the next number to be allocated by the source base station and the quantity of numbers reserved by the source base station, to serve as a number corresponding to a next piece of downlink data to be transmitted by the target base station.

For example, a last number that has been allocated by the source base station is 5, and a next number not allocated by the source base station is 6. In this case, the sequence number status transfer information sent by the source base station to the target base station includes a count being 6 and an offset being 10. In this case, the target base station allocates, based on the obtained sequence number status transfer information, a number to corresponding downlink data starting from 10 + 6 = 16, that is, a number 16.

Form 2: a number of the last downlink data reserved by the source base station. Therefore, the target base station may select, based on the number of the last downlink data, a number of downlink data initially sent by the target base station to the terminal.

Specifically, the SN status transfer message sent by the source base station to the target base station directly carries the next number to be allocated by the target base station. The number is a sum of the next number to be allocated by the source base station and the quantity of numbers reserved by the source base station. Therefore, the target base station may send downlink data starting from the next number to be allocated by the target base station.

In this embodiment of the present invention, the number may be represented as a PDCP sequence number.

In an embodiment of the present invention, the method may further include:
after the terminal has successfully accessed the target base station, sending, by the source base station to the target base station, a number of last downlink data actually sent by the source base station to the terminal.

Specifically, the offset reserved by the source base station has the following two cases:
case 1: the source base station does not exhaust the offset; or
case 2: the offset is insufficient for the source base station. For example, after the source base station sends the SN status transfer, a number required by downlink data received from a serving gateway is greater than the offset. Therefore, for downlink data after the offset, the source base station can allocate no number.

In case 1, after receiving the access indication sent by the target base station, the source base station sends a status of using the numbers reserved by the source base station to the target base station, for example, a quantity of reserved numbers that have been allocated, a quantity of remaining numbers not allocated, a value last allocated, a value interval not used, or the like. The target base station may forward the foregoing status to the terminal, and based on this, the terminal may skip, during sequential transfer, the value interval not used.

In case 2, downlink data whose number is not allocated cannot be sent by the source base station, the source base station forwards, to the target base station, the downlink data whose number is not allocated, and the target base station sends, to the terminal, the downlink data whose number is not allocated.

In this embodiment of the present invention, in the handover process, the target base station can send, to the terminal, downlink data received from the serving gateway, thereby improving transmission performance during handover and further improving user experience.

It may be understood that although the embodiments of the present invention relate to a transmission method for an inter-base station handover process, the embodiments of the present invention are also applicable to a transmission method for an intra-base station handover process. A difference lies in that the transmission method for intra-base station handover does not involve a source base station and a target base station, and instead relates to a same base station. Therefore, based on a handover process, the intra-base station transmission manner can better omit signaling interaction between a source base station and a target base station than the inter-base station transmission method, thereby reducing more system overheads.

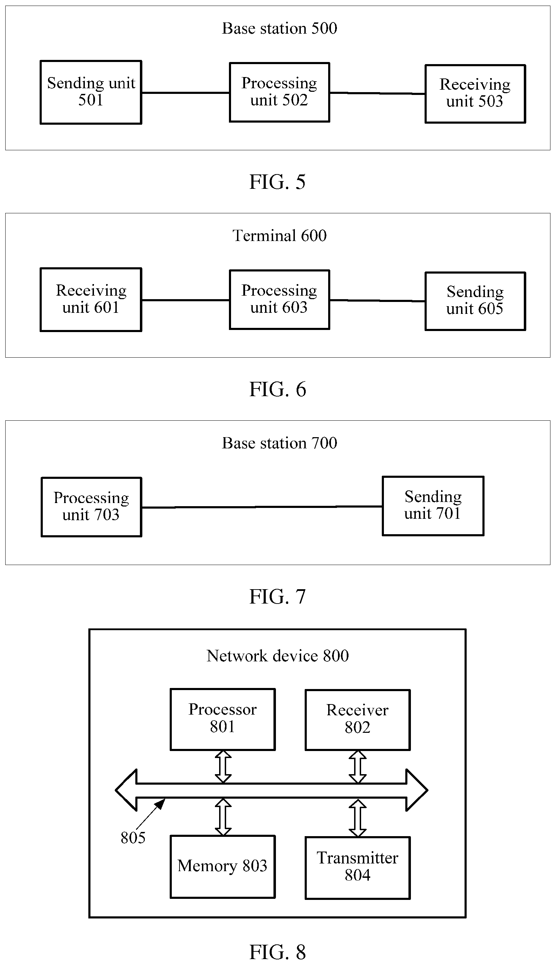

The foregoing describes the transmission method in the embodiments of the present invention in detail with reference to FIG. 1 to FIG. 4, and the following describes a terminal and a base station in the embodiments of the present invention with reference to FIG. 5 to FIG. 7.

FIG. 5 is a schematic block diagram of a base station 500 according to an embodiment of the present invention. The base station may be a source base station, and the base station 500 includes:
a sending unit 501, configured to send a handover command to a terminal, where the handover command is used to trigger a process of handing over the terminal from the base station to a target base station; and
a processing unit 502, configured to maintain user data transmission between the base station and the terminal, where
the sending unit 501 is further configured to: in the handover process, when maintaining of the user data transmission between the base station and the terminal is stopped, send a first status report to the terminal, where the first status report is used to indicate, to the terminal, a status of receiving uplink data of the terminal by the base station.

Optionally, the base station 500 may further include:
a receiving unit 503, configured to: in the handover process, receive an access indication sent by the target base station, where the access indication is used to indicate that the terminal has successfully accessed the target base station; and
the sending unit 501 is specifically configured to:
   in the handover process, when the receiving unit receives the access indication sent by the target base station, send the first status report to the terminal.

Optionally, the receiving unit 503 may be configured to: in the handover process, receive a handover indication sent by the terminal, where the handover indication is used to indicate that the terminal has interrupted or is to interrupt a connection to the base station; and
the sending unit 501 is specifically configured to:
in the handover process, when the receiving unit receives the handover indication sent by the terminal, send the first status report to the terminal.

In this embodiment of the present invention, once the user data transmission between the source base station and the terminal is stopped in the handover process, the source base station sends the first status report to the terminal in time, and the terminal can learn earlier, based on the received first status report, uplink data that has been successfully received by the source base station. Therefore, the terminal no longer sends the same uplink data to the target base station, thereby improving uplink data transmission efficiency.

Optionally, after receiving the handover indication sent by the terminal, the receiving unit 503 is further configured to:
receive a second status report sent by the terminal, where the second status report is used to indicate, to the base station, a status of receiving downlink data by the terminal.

Optionally, the sending unit 501 is further configured to:
send sequence number status transfer information to the target base station, where the sequence number status transfer information is used to indicate, to the target base station, a status of obtaining uplink data of the terminal by the base station; and
forward the obtained uplink data of the terminal to the target base station.

It may be understood that the sequence number status transfer information may include a sequence number of uplink data first lost by the source base station and a sequence number that starts from the sequence number and that is of uplink data not received.

Optionally, based on the second status report sent by the terminal and received by the receiving unit 503, the sequence number status transfer information is further used to indicate, to the target base station, a status of sending downlink data to the terminal by the base station.

In this embodiment of the present invention, based on the second status report, the source base station can indicate more accurately, to the target base station, the status of sending downlink data to the terminal by the source base station. Subsequently, downlink data forwarded by the target base station to the terminal does not include downlink data of the source base station that has been successfully received by the terminal, thereby further improving downlink data transmission efficiency.

Optionally, the first status report or the second status report is any one of the following:
a Radio Link Control (RLC) status report; or
a Packet Data Convergence Protocol (PDCP) status report.

Optionally, the RLC status report indicates:
a sequence number of a next piece of uplink data not received by the base station and sequence numbers that are before the sequence number and that are of all uplink data not received; or
a sequence number of a next piece of downlink data not received by the terminal and sequence numbers that are before the sequence number and that are of all downlink data not received.

Optionally, the PDCP status report indicates:
a sequence number of a first piece of uplink data lost by the base station and a sequence number that starts from the sequence number and that is of uplink data not received; or
a sequence number of a next piece of downlink data not received by the terminal and a sequence number that starts from the sequence number and that is of downlink data not received.

Therefore, this embodiment of the present invention can effectively improve user data transmission efficiency, reduce processing load of the base station, and reduce system signaling overheads.

It should be understood that the base station 500 in this embodiment of the present invention may correspond to the source base station in the transmission method in the embodiments of the present invention, and the foregoing and other operations and/or functions of the modules of the base station 500 are respectively for purpose of implementing corresponding procedures in the methods in FIG. 1 to FIG. 4. For brevity, details are not described herein again.

FIG. 6 is a schematic block diagram of a terminal 600 according to an embodiment of the present invention. The terminal 600 includes:
a receiving unit 601, configured to receive a handover command sent by a source base station; and
a processing unit 603, configured to: based on the handover command, trigger a process of handing over from the source base station to a target base station, and maintain user data transmission with the source base station, where
the receiving unit 601 is further configured to: in the handover process, when maintaining of the user data transmission between the source base station and the terminal is stopped, receive a first status report sent by the source base station, where the first status report is used to indicate, to the terminal, a status of receiving uplink data of the terminal by the source base station.

Optionally, in the handover process, when the source base station stops the user data transmission with the terminal, the receiving unit 601 is specifically configured to:
in the handover process, when the source base station receives an access indication sent by the target base station, receive the first status report sent by the source base station, where
the access indication is used to indicate, to the source base station, that the terminal has successfully accessed the target base station.

Optionally, the terminal 600 further includes a sending unit 605, configured to:
in the handover process, send a handover indication to the source base station, where the handover indication is used to indicate that the terminal has interrupted or is to interrupt a connection to the source base station; and
in the handover process, when maintaining of the user data transmission between the source base station and the terminal is stopped, the terminal receives the first status report sent by the source base station, where the receiving unit 601 is specifically configured to:
   in the handover process, receive the first status report sent by the source base station based on the handover indication.

In this embodiment of the present invention, once the user data transmission between the source base station and the terminal is stopped in the handover process, the source base station sends the first status report to the terminal in time, and the terminal can learn earlier, based on the received first status report, uplink data that has been successfully received by the source base station. Therefore, the terminal no longer sends the same uplink data to the target base station, thereby improving uplink data transmission efficiency.

Optionally, after the sending unit 605 sends the handover indication to the source base station, the sending unit 605 is further configured to:
send a second status report to the source base station, where the second status report is used to indicate, to the source base station, a status of receiving downlink data by the terminal.

In this embodiment of the present invention, based on the second status report, the source base station can indicate more accurately, to the target base station, the status of sending downlink data to the terminal by the source base station. Subsequently, downlink data forwarded by the target base station to the terminal does not include downlink data of the source base station that has been successfully received by the terminal, thereby further improving downlink data transmission efficiency.

Optionally, the first status report or the second status report is any one of the following:
a Radio Link Control (RLC) status report; or
a Packet Data Convergence Protocol (PDCP) status report.

Optionally, the RLC status report indicates:
a sequence number of a next piece of uplink data not received by the source base station and sequence numbers that are before the sequence number and that are of all uplink data not received; or
a sequence number of a next piece of downlink data not received by the terminal and sequence numbers that are before the sequence number and that are of all downlink data not received.

Optionally, the PDCP status report indicates:
a sequence number of a first piece of uplink data lost by the source base station and a sequence number that starts from the sequence number and that is of uplink data not received; or
a sequence number of a next piece of downlink data not received by the terminal and a sequence number that starts from the sequence number and that is of downlink data not received.

Therefore, this embodiment of the present invention can effectively improve user data transmission efficiency, reduce processing load of the base station, and reduce system signaling overheads.

It should be understood that the terminal 600 in this embodiment of the present invention may correspond to the terminal in the transmission method in the embodiments of the present invention, and the foregoing and other operations and/or functions of the modules of the terminal 600 are respectively for purpose of implementing corresponding procedures in the methods in FIG. 1 to FIG. 4. For brevity, details are not described herein again.

FIG. 7 is a schematic block diagram of a base station 700 according to an embodiment of the present invention. The base station may be a source base station, and the base station 700 includes:
a sending unit 701, configured to send a handover command to a terminal, where the handover command is used to trigger a process of handing over the terminal from the source base station to a target base station; and
a processing unit 703, configured to generate sequence number status transfer information, where the sequence number status transfer information is used to indicate a start number of downlink data that is to be allocated by the target base station, where
the sending unit 701 is further configured to send the sequence number status transfer information to the target base station based on the handover command.

Therefore, in the handover process in this embodiment of the present invention, the terminal may separately obtain, from the source base station and the target base station, downlink data sent by a serving gateway, thereby improving downlink transmission efficiency.

Optionally, the sending unit 701 is further configured to: after the terminal has successfully accessed the target base station, forward downlink data to the target base station, so that the target base station sends the downlink data to the terminal.

Forwarding downlink user data to the target base station by the source base station is delayed, to further prevent the target base station from repeatedly sending, to the terminal in the handover process, downlink data that has been successfully obtained by the terminal from the source base station, thereby further improving downlink data transmission efficiency.

In this embodiment of the present invention, the source base station sends the sequence number status transfer information to the target base station based on the handover command. Specifically, any one of the following conditions may be satisfied:
condition 1: after the source base station sends the handover command to the terminal, the source base station immediately sends the sequence number status transfer information to the target base station; or
condition 2: before the terminal triggers random access to the target base station, the source base station sends the sequence number status transfer information to the target base station.

Specifically, the sequence number status transfer information may be represented in at least any one of the following forms:
Form 1: a count (English: count) and an offset (English: offset).

It may be understood that the count is used to indicate a next number not allocated by the source base station. The offset is used to indicate a number reserved by the source base station to send downlink data by the source base station. Therefore, the target base station may select, based on the count and the offset, a number of downlink data first sent by the target base station to the terminal. Specifically, because the sequence number status transfer information needs to indicate, to the target base station, a start value of downlink data that the target base station is to transmit to the terminal, the start value may be a number allocated by the target base station starting from a specified value. Because in the handover process, the source base station further needs to continue to allocate a number of downlink data sent to the terminal, the source base station further reserves a quantity of (assuming that a value of the quantity is the offset) numbers, that is, the source base station reserves and uses a segment of numbers. Therefore, the SN status transfer sent by the source base station to the target base station may carry the quantity of numbers reserved by the source base station and the next number to be allocated by the source base station. When the target base station needs to send downlink data to the terminal, the target base station allocates a number to the downlink data, for example, performs allocation starting from a sum of the next number to be allocated by the source base station and the quantity of numbers reserved by the source base station, to serve as a number corresponding to a next piece of downlink data to be transmitted by the target base station.

For example, a last number that has been allocated by the source base station is 5, and a next number not allocated by the source base station is 6. In this case, the sequence number status transfer information sent by the source base station to the target base station includes a count being 6 and an offset being 10. In this case, the target base station allocates, based on the obtained sequence number status transfer information, a number to corresponding downlink data starting from 10 + 6 = 16, that is, a number 16.

Form 2: a number of the last downlink data reserved by the source base station. Therefore, the target base station may select, based on the number of the last downlink data, a number of downlink data initially sent by the target base station to the terminal.

Specifically, the SN status transfer message sent by the source base station to the target base station directly carries the next number to be allocated by the target base station. The number is a sum of the next number to be allocated by the source base station and the quantity of numbers reserved by the source base station. Therefore, the target base station may send downlink data starting from the next number to be allocated by the target base station.

In this embodiment of the present invention, the number may be represented as a PDCP sequence number.

In an embodiment of the present invention, the method may further include:
after the terminal has successfully accessed the target base station, the source base station sends, to the target base station, a number of last downlink data actually sent by the source base station to the terminal.

Optionally, the sending unit 701 may be further configured to: after the terminal has successfully accessed the target base station, send, to the target base station, a number of last downlink data actually sent by the source base station to the terminal.

In this embodiment of the present invention, in the handover process, the terminal may receive, by using the source base station and the target base station, downlink data sent by a serving gateway, thereby improving transmission performance during handover and further improving user experience.

It should be understood that the base station 700 in this embodiment of the present invention may correspond to the source base station in the transmission method in the embodiments of the present invention, and the foregoing and other operations and/or functions of the modules of the base station 700 are respectively for purpose of implementing corresponding procedures in the methods in FIG. 1 to FIG. 4. For brevity, details are not described herein again.

The terminal and/or the base station in the foregoing apparatus embodiments may further include a memory or a bus system each. A processor, the memory, a receiver, and a transmitter are connected by using the bus system, the memory is configured to store an instruction, and the processor is configured to execute the instruction stored by the memory, to control the receiver to receive a signal and control the transmitter to send a signal. For example, in the foregoing embodiments, the operations of the receiving unit may be performed by the receiver, the operations of the sending unit may be performed by the transmitter, and the operations of the processing unit may be performed by the processor.

As shown in FIG. 8, a network device 800 is used as an example. The network device 800 may be the base station or the terminal in the foregoing embodiments, and includes a processor 801, a receiver 802, a memory 803, a transmitter 804, and a bus 805.

It should be understood that in the embodiments of the present invention, the processor may be a central processing unit (Central Processing Unit, "CPU" for short), or the processor may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory may include a read-only memory and a random access memory, and provide an instruction and data to the processor. A part of the memory may further include a non-volatile random access memory. For example, the memory may further store information of a device type.

The bus system may further include a power bus, a control bus, a status signal bus, and the like, in addition to a data bus. However, for the purpose of clear descriptions, in the embodiments of the present invention, various types of buses are all referred to as a bus system.

In an implementation process, steps in the foregoing methods can be implemented by using a hardware integrated logical circuit in the processor, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

It should be further understood that various digit numbers such as the first and the second in this specification are only for distinguishing purpose for ease of description, and are not intended to limit the scope of the embodiments of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.
When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope of the claims shall fall within the protection scope of the present invention. Therefore, the protection scope of the present invention shall be subject to the protection scope of the claims.

## Claims

1. A transmission method, comprising:
sending (301), by a source base station, a handover command to a terminal, wherein the handover command is used to trigger a process of handing over the terminal from the source base station to a target base station, and the source base station maintains user data transmission with the terminal; **characterized by**,
in the handover process, when maintaining of the user data transmission between the source base station and the terminal is stopped, sending (302), by the source base station, a first status report to the terminal, wherein the first status report is used to indicate, to the terminal, a status of receiving uplink data of the terminal by the source base station.

2. The method according to claim 1, further comprising:
in the handover process, receiving, by the source base station, an access indication sent by the target base station, wherein the access indication is used to indicate that the terminal has successfully accessed the target base station, wherein
the in the handover process, when maintaining of the user data transmission between the source base station and the terminal is stopped, sending (302), by the source base station, a first status report to the terminal specifically comprises:
in the handover process, when the source base station receives the access indication sent by the target base station, sending, by the source base station, the first status report to the terminal.

3. The method according to claim 1, further comprising:
in the handover process, receiving, by the source base station, a handover indication sent by the terminal, wherein the handover indication is used to indicate that the terminal has interrupted or is to interrupt a connection to the source base station, wherein
the in the handover process, when maintaining of the user data transmission between the source base station and the terminal is stopped, sending (302), by the source base station, a first status report to the terminal specifically comprises:
in the handover process, when the source base station receives the handover indication sent by the terminal, sending, by the source base station, the first status report to the terminal.

4. The method according to claim 3, after the receiving, by the source base station, a handover indication sent by the terminal, further comprising:
receiving, by the source base station, a second status report sent by the terminal, wherein the second status report is used to indicate, to the source base station, a status of receiving downlink data by the terminal.

5. The method according to any one of claims 1 to 3, after the sending (302), by the source base station, a first status report to the terminal, further comprising:
sending, by the source base station, sequence number status transfer information to the target base station, wherein the sequence number status transfer information is used to indicate, to the target base station, a status of obtaining uplink data of the terminal by the source base station; and
forwarding, by the source base station, the obtained uplink data of the terminal to the target base station.

6. A transmission method, comprising:
receiving (301'), by a terminal, a handover command sent by a source base station;
based on the handover command, triggering (302'), by the terminal, a process of handing over from the source base station to a target base station, and maintaining user data transmission with the source base station; **characterized by**,
in the handover process, when maintaining of the user data transmission between the source base station and the terminal is stopped, receiving (303'), by the terminal, a first status report sent by the source base station, wherein the first status report is used to indicate, to the terminal, a status of receiving uplink data of the terminal by the source base station.

7. The method according to claim 6, wherein the in the handover process, when maintaining of the user data transmission between the source base station and the terminal is stopped, receiving (303'), by the terminal, a first status report sent by the source base station specifically comprises:
in the handover process, when the source base station receives an access indication sent by the target base station, receiving, by the terminal, the first status report sent by the source base station, wherein
the access indication is used to indicate, to the source base station, that the terminal has successfully accessed the target base station.

8. The method according to claim 6, further comprising:
in the handover process, sending, by the terminal, a handover indication to the source base station, wherein the handover indication is used to indicate that the terminal has interrupted or is to interrupt a connection to the source base station, wherein
the in the handover process, when maintaining of the user data transmission between the source base station and the terminal is stopped, receiving (303'), by the terminal, a first status report sent by the source base station specifically comprises:
in the handover process, receiving, by the terminal, the first status report sent by the source base station based on the handover indication.

9. A base station (500), comprising:
a sending unit (501), configured to send a handover command to a terminal, wherein the handover command is used to trigger a process of handing over the terminal from the base station to a target base station; and
a processing unit (502), configured to maintain user data transmission between the base station and the terminal, **characterized in that**
the sending unit (501) is further configured to: in the handover process, when maintaining of the user data transmission between the base station and the terminal is stopped, send a first status report to the terminal, wherein the first status report is used to indicate, to the terminal, a status of receiving uplink data of the terminal by the base station.

10. The base station according to claim 9, further comprising:
a receiving unit (503), configured to: in the handover process, receive an access indication sent by the target base station, wherein the access indication is used to indicate that the terminal has successfully accessed the target base station, wherein
the sending unit (501) is specifically configured to:
in the handover process, when the receiving unit (503) receives the access indication sent by the target base station, send the first status report to the terminal.

11. The base station according to claim 9, further comprising:
a receiving unit (503), configured to: in the handover process, receive a handover indication sent by the terminal, wherein the handover indication is used to indicate that the terminal has interrupted or is to interrupt a connection to the base station, wherein
the sending unit (501) is specifically configured to:
in the handover process, when the receiving unit (503) receives the handover indication sent by the terminal, send the first status report to the terminal.

12. The base station according to claim 11, wherein after receiving the handover indication sent by the terminal, the receiving unit (503) is further configured to:
receive a second status report sent by the terminal, wherein the second status report is used to indicate, to the base station, a status of receiving downlink data by the terminal.

13. The base station according to any one of claims 9 to 11, wherein after sending the first status report to the terminal, the sending unit (501) is further configured to:
send sequence number status transfer information to the target base station, wherein the sequence number status transfer information is used to indicate, to the target base station, a status of obtaining uplink data of the terminal by the base station; and
forward the obtained uplink data of the terminal to the target base station.

14. A terminal (600), comprising:
a receiving unit (601), configured to receive a handover command sent by a source base station; and
a processing unit (602), configured to: based on the handover command, trigger a process of handing over from the source base station to a target base station, and maintain user data transmission with the source base station, **characterized in that**
the receiving unit (601) is further configured to: in the handover process, when maintaining of the user data transmission between the source base station and the terminal is stopped, receive a first status report sent by the source base station, wherein the first status report is used to indicate, to the terminal, a status of receiving uplink data of the terminal by the source base station.

15. The terminal according to claim 14, wherein in the handover process, when maintaining of the user data transmission between the source base station and the terminal is stopped, the receiving unit (601) is specifically configured to:
in the handover process, when the source base station receives an access indication sent by the target base station, receive the first status report sent by the source base station, wherein
the access indication is used to indicate, to the source base station, that the terminal has successfully accessed the target base station.

16. The terminal according to claim 14,
further comprising a sending unit (605), configured to: in the handover process, send a handover indication to the source base station, wherein the handover indication is used to indicate that the terminal has interrupted or is to interrupt a connection to the base station, wherein
in the handover process, when maintaining of the user data transmission between the source base station and the terminal is stopped, the terminal receives the first status report sent by the source base station, and the receiving unit (601) is specifically configured to:
in the handover process, receive the first status report sent by the source base station based on the handover indication.

## Patentansprüche

1. Übertragungsverfahren, Folgendes umfassend:
Senden (301), durch eine Quellbasisstation, eines Übergabebefehls an ein Endgerät, wobei der Übergabebefehl verwendet wird, um einen Prozess des Übergebens des Endgeräts von der Quellbasisstation an eine Zielbasisstation auszulösen, und die Quellbasisstation eine Benutzerdatenübertragung mit dem Endgerät unterhält; **gekennzeichnet durch**
Senden (302), in dem Übergabeprozess, wenn ein Unterhalten der Benutzerdatenübertragung zwischen der Quellbasisstation und dem Endgerät gestoppt ist, durch die Quellbasisstation, eines ersten Statusberichts an das Endgerät, wobei der erste Statusbericht verwendet wird, um dem Endgerät einen Empfangsstatus von Aufwärtsstreckendaten des Endgeräts durch die Quellbasisstation anzugeben.

2. Verfahren nach Anspruch 1, weiterhin Folgendes umfassend:
Empfangen, in dem Übergabeprozess, durch die Quellbasisstation, einer Zugriffsangabe, die durch die Zielbasisstation gesendet wurde, wobei die Zugriffsangabe verwendet wird, um anzugeben, dass das Endgerät erfolgreich auf die Zielbasisstation zugegriffen hat, wobei
das Senden (302), in dem Übergabeprozess, wenn ein Unterhalten der Benutzerdatenübertragung zwischen der Quellbasisstation und dem Endgerät gestoppt ist, durch die Quellbasisstation, eines ersten Statusberichts an das Endgerät insbesondere Folgendes umfasst:
Senden, in dem Übergabeprozess, wenn die Quellbasisstation die Zugriffsangabe empfängt, die durch die Zielbasisstation gesendet wurde, des ersten Statusberichts durch die Quellbasisstation an das Endgerät.

3. Verfahren nach Anspruch 1, weiterhin Folgendes umfassend:
Empfangen, in dem Übergabeprozess, durch die Quellbasisstation, einer Übergabeangabe, die durch das Endgerät gesendet wurde, wobei die Übergabeangabe verwendet wird, um anzugeben, dass das Endgerät eine Verbindung mit der Quellbasisstation abgebrochen hat oder abbrechen wird, wobei
das Senden (302), in dem Übergabeprozess, wenn ein Unterhalten der Benutzerdatenübertragung zwischen der Quellbasisstation und dem Endgerät gestoppt ist, durch die Quellbasisstation, eines ersten Statusberichts an das Endgerät insbesondere Folgendes umfasst:
Senden, in dem Übergabeprozess, wenn die Quellbasisstation die Übergabeangabe empfängt, die durch das Endgerät gesendet wurde, des ersten Statusberichts durch die Quellbasisstation an das Endgerät.

4. Verfahren nach Anspruch 3, nach dem Empfangen einer Übergabeangabe durch die Quellbasisstation, die durch das Endgerät gesendet wurde, weiterhin Folgendes umfassend:
Empfangen, durch die Quellbasisstation, eines zweiten Statusberichts, der durch das Endgerät gesendet wurde, wobei der zweite Statusbericht verwendet wird, um der Quellbasisstation einen Status des Empfangens von Abwärtsstreckendaten durch das Endgerät anzugeben.

5. Verfahren nach einem der Ansprüche 1 bis 3, nach dem Senden (302) eines ersten Statusberichts durch die Quellbasisstation an das Endgerät, weiterhin Folgendes umfassend:
Senden, durch die Quellbasisstation, von Sequenznummer-Statusübertragungsinformationen an die Zielbasisstation, wobei die Sequenznummer-Statusübertragungsinformationen verwendet werden, der Zielbasisstation einen Status eines Erhaltens von Aufwärtsstreckendaten des Endgeräts durch die Quellbasisstation anzugeben; und
Weiterleiten, durch die Quellbasisstation, der erhaltenen Aufwärtsstreckendaten des Endgeräts an die Zielbasisstation.

6. Übertragungsverfahren, Folgendes umfassend:
Empfangen (301') eines Übergabebefehls, der durch eine Quellbasisstation gesendet wurde;
Auslösen (302'), auf der Grundlage des Übergabebefehls, eines Prozesses des Übergebens von der Quellbasisstation an eine Zielbasisstation und Unterhalten einer Benutzerdatenübertragung mit der Quellbasisstation; **gekennzeichnet durch**,
Empfangen (303'), in dem Übergabeprozess, wenn ein Unterhalten der Benutzerdatenübertragung zwischen der Quellbasisstation und dem Endgerät gestoppt ist, durch das Endgerät, eines ersten Statusberichts, der durch die Quellbasisstation gesendet wurde, wobei der erste Statusbericht verwendet wird, um dem Endgerät einen Empfangsstatus von Aufwärtsstreckendaten des Endgeräts durch die Quellbasisstation anzugeben.

7. Verfahren nach Anspruch 6, wobei das Empfangen (303'), in dem Übergabeprozess, wenn ein Unterhalten der Benutzerdatenübertragung zwischen der Quellbasisstation und dem Endgerät gestoppt ist, durch das Endgerät, eines ersten Statusberichts, der durch die Quellbasisstation gesendet wurde, insbesondere Folgendes umfasst:
Empfangen, in dem Übergabeprozess, wenn die Quellbasisstation eine Zugriffsangabe empfängt, die durch die Zielbasisstation gesendet wurde, durch das Endgerät, des ersten Statusberichts, der durch die Quellbasisstation gesendet wurde, wobei
die Zugriffsangabe verwendet wird, um der Quellbasisstation anzugeben, dass das Endgerät erfolgreich auf die Zielbasisstation zugegriffen hat.

8. Verfahren nach Anspruch 6, weiterhin Folgendes umfassend:
Senden, in dem Übergabeprozess, durch das Endgerät, einer Übergabeangabe an die Quellbasisstation, wobei die Übergabeangabe verwendet wird, um anzugeben, dass das Endgerät eine Verbindung mit der Quellbasisstation abgebrochen hat oder abbrechen wird, wobei
das Empfangen (303'), in dem Übergabeprozess, wenn ein Unterhalten der Benutzerdatenübertragung zwischen der Quellbasisstation und dem Endgerät gestoppt ist, durch das Endgerät, eines ersten Statusberichts, der durch die Quellbasisstation gesendet wurde, insbesondere Folgendes umfasst:
Empfangen, in dem Übergabeprozess, durch das Endgerät, des ersten Statusberichts, der durch die Quellbasisstation auf der Grundlage der Übergabeangabe gesendet wurde.

9. Basisstation (500), Folgendes umfassend:
eine Sendeeinheit (501), die eingerichtet ist, um einen Übergabebefehl an ein Endgerät zu senden, wobei der Übergabebefehl verwendet wird, um einen Prozess eines Übergebens des Endgeräts von der Basisstation an eine Zielbasisstation auszulösen; und
eine Verarbeitungseinheit (502), die eingerichtet ist, um eine Benutzerdatenübertragung zwischen der Basisstation und dem Endgerät zu unterhalten, **dadurch gekennzeichnet, dass**
die Sendeeinheit (501) weiterhin eingerichtet ist, um: in dem Übergabeprozess, wenn ein Unterhalten der Benutzerdatenübertragung zwischen der Basisstation und dem Endgerät gestoppt ist, einen ersten Statusbericht an das Endgerät zu senden, wobei der erste Statusbericht verwendet wird, um dem Endgerät einen Empfangsstatus von Aufwärtsstreckendaten des Endgeräts durch die Basisstation anzugeben.

10. Basisstation nach Anspruch 9, weiterhin Folgendes umfassend:
eine Empfangseinheit (503), die eingerichtet ist, um: in dem Übergabeprozess, eine Zugriffsangabe zu empfangen, die durch die Zielbasisstation gesendet wurde, wobei die Zugriffsangabe verwendet wird, um anzugeben, dass das Endgerät erfolgreich auf die Zielbasisstation zugegriffen hat, wobei
die Sendeeinheit (501) insbesondere eingerichtet ist, um:
in dem Übergabeprozess, wenn die Empfangseinheit (503) die Zugriffsangabe empfängt, die durch die Zielbasisstation gesendet wurde, den ersten Statusbericht an das Endgerät zu senden.

11. Basisstation nach Anspruch 9, weiterhin Folgendes umfassend:
eine Empfangseinheit (503), die eingerichtet ist, um: in dem Übergabeprozess, eine Übergabeangabe zu empfangen, die durch das Endgerät gesendet wurde, wobei die Übergabeangabe verwendet wird, um anzugeben, dass das Endgerät eine Verbindung mit der Basisstation abgebrochen hat oder abbrechen wird, wobei
die Sendeeinheit (501) insbesondere eingerichtet ist, um: in dem Übergabeprozess, wenn die Empfangseinheit (503) die Übergabeangabe empfängt, die durch das Endgerät gesendet wurde, den ersten Statusbericht an das Endgerät zu senden.

12. Basisstation nach Anspruch 11, wobei nach Empfangen der Übergabeangabe, die durch das Endgerät gesendet wurde, die Empfangseinheit (503) weiterhin eingerichtet ist, um:
einen zweiten Statusbericht, der durch das Endgerät gesendet wurde, zu empfangen, wobei der zweite Statusbericht verwendet wird, um der Basisstation einen Status des Empfangens von Abwärtsstreckendaten durch das Endgerät anzugeben.

13. Basisstation nach einem der Ansprüche 9 bis 11, wobei nach Senden des ersten Zustandsberichts an das Endgerät, die Sendeeinheit (501) weiterhin eingerichtet ist, um:
Sequenznummer-Statusübertragungsinformationen an die Zielbasisstation zu senden, wobei die Sequenznummer-Statusübertragungsinformationen verwendet werden, der Zielbasisstation einen Status eines Erhaltens von Aufwärtsstreckendaten des Endgeräts durch die Basisstation anzugeben; und
die erhaltenen Aufwärtsstreckendaten des Endgeräts an die Zielbasisstation weiterzuleiten.

14. Endgerät (600), Folgendes umfassend:
eine Empfangseinheit (601), die eingerichtet ist, um einen Übergabebefehl zu empfangen, der durch eine Quellbasisstation gesendet wurde; und
eine Verarbeitungseinheit (602), die eingerichtet ist, um: auf der Grundlage des Übergabebefehls, einen Prozess des Übergebens von der Quellbasisstation an eine Zielbasisstation auszulösen, und eine Benutzerdatenübertragung mit der Quellbasisstation zu unterhalten, **dadurch gekennzeichnet, dass**
die Empfangseinheit (601) weiterhin eingerichtet ist, um: in dem Übergabeprozess, wenn ein Unterhalten der Benutzerdatenübertragung zwischen der Quellbasisstation und dem Endgerät gestoppt ist, einen ersten Statusbericht zu empfangen, der durch die Quellbasisstation gesendet wurde, wobei der erste Statusbericht verwendet wird, um dem Endgerät einen Empfangsstatus von Aufwärtsstreckendaten des Endgeräts durch die Quellbasisstation anzugeben.

15. Endgerät nach Anspruch 14, wobei in dem Übergabeprozess, wenn ein Unterhalten der Benutzerdatenübertragung zwischen der Quellbasisstation und dem Endgerät gestoppt ist, die Empfangseinheit (601) insbesondere eingerichtet ist, um:
in dem Übergabeprozess, wenn die Quellbasisstation eine Zugriffsangabe empfängt, die durch die Zielbasisstation gesendet wurde, den ersten Statusbericht zu empfangen, der durch die Quellbasisstation gesendet wurde, wobei
die Zugriffsangabe verwendet wird, um der Quellbasisstation anzugeben, dass das Endgerät erfolgreich auf die Zielbasisstation zugegriffen hat.

16. Endgerät nach Anspruch 14,
weiterhin umfassend eine Sendeeinheit (605), die eingerichtet ist, um: in dem Übergabeprozess, eine Übergabeangabe an die Quellbasisstation zu senden, wobei die Übergabeangabe verwendet wird, um anzugeben, dass das Endgerät eine Verbindung mit der Basisstation abgebrochen hat oder abbrechen wird, wobei
in dem Übergabeprozess, wenn ein Unterhalten der Benutzerdatenübertragung zwischen der Quellbasisstation und dem Endgerät gestoppt ist, das Endgerät den ersten Statusbericht empfängt, der durch die Quellbasisstation gesendet wurde, und die Empfangseinheit (601) insbesondere eingerichtet ist, um:
in dem Übergabeprozess den ersten Statusbericht zu empfangen, der durch die Quellbasisstation auf der Grundlage der Übergabeangabe gesendet wurde.

## Revendications

1. Procédé de transmission, consistant à :
envoyer (301), par une station de base source, une commande de transfert à un terminal, la commande de transfert étant utilisée pour déclencher un processus de transfert du terminal depuis la station de base source vers une station de base cible, et la station de base source maintenant une transmission de données d'utilisateur avec le terminal ;
le procédé étant **caractérisé par** l'étape consistant à :
dans le processus de transfert, quand le maintien de la transmission de données d'utilisateur entre la station de base source et le terminal est arrêté, envoyer (302), par la station de base source, un premier rapport de statut au terminal, le premier rapport de statut étant utilisé pour indiquer, au terminal, un statut de réception de données en liaison montante du terminal par la station de base source.

2. Procédé selon la revendication 1, consistant en outre à :
dans le processus de transfert, recevoir, par la station de base source, une indication d'accès envoyée par la station de base cible, l'indication d'accès étant utilisée pour indiquer que le terminal a accédé de manière satisfaisante à la station de base cible,
dans lequel, dans le processus de transfert, quand le maintien de la transmission de données d'utilisateur entre la station de base source et le terminal est arrêté, l'envoi (302), par la station de base source, d'un premier rapport de statut au terminal consiste spécifiquement à :
dans le processus de transfert, quand la station de base source reçoit l'indication d'accès envoyée par la station de base cible, envoyer, par la station de base source, le premier rapport de statut au terminal.

3. Procédé selon la revendication 1, consistant en outre à :
dans le processus de transfert, recevoir, par la station de base source, une indication de transfert envoyée par le terminal, l'indication de transfert étant utilisée pour indiquer que le terminal a interrompu ou est sur le point d'interrompre une connexion avec la station de base source,
dans lequel, dans le processus de transfert, quand le maintien de la transmission de données d'utilisateur entre la station de base source et le terminal est arrêté, l'envoi (302), par la station de base source, d'un premier rapport de statut au terminal consiste spécifiquement à :
dans le processus de transfert, quand la station de base source reçoit l'indication de transfert envoyée par le terminal, envoyer, par la station de base source, le premier rapport de statut au terminal.

4. Procédé selon la revendication 3, consistant en outre, après la réception, par la station de base source, d'une indication de transfert envoyée par le terminal, à :
recevoir, par la station de base source, un second rapport de statut envoyé par le terminal, le second rapport de statut étant utilisé pour indiquer, à la station de base source, un statut de réception de données en liaison descendante par le terminal.

5. Procédé selon l'une quelconque des revendications 1 à 3, consistant en outre, après l'envoi (302), par la station de base source, d'un premier rapport de statut au terminal, à :
envoyer, par la station de base source, une information de transfert de statut de numéro de séquence à la station de base cible, l'information de transfert de statut de numéro de séquence étant utilisée pour indiquer, à la station de base cible, un statut d'obtention de données en liaison montante du terminal par la station de base source ; et
transférer, par la station de base source, les données en liaison montante obtenues du terminal à la station de base cible.

6. Procédé de transmission, consistant à :
recevoir (301'), par un terminal, une commande de transfert envoyée par une station de base source ;
sur la base de la commande de transfert, déclencher (302'), par le terminal, un processus de transfert depuis la station de base source à une station de base cible, et maintenir une transmission de données d'utilisateur avec la station de base source ;
le procédé étant **caractérisé par** l'étape consistant à :
dans le processus de transfert, quand le maintien de la transmission de données d'utilisateur entre la station de base source et le terminal est arrêté, recevoir (303'), par le terminal, un premier rapport de statut envoyé par la station de base source, le premier rapport de statut étant utilisé pour indiquer, au terminal, un statut de réception de données en liaison montante du terminal par la station de base source.

7. Procédé selon la revendication 6, dans lequel, dans le processus de transfert, quand le maintien de la transmission de données d'utilisateur entre la station de base source et le terminal est arrêté, la réception (303'), par le terminal, d'un premier rapport de statut envoyé par la station de base source, consiste spécifiquement à :
dans le processus de transfert, quand la station de base source reçoit une indication d'accès envoyée par la station de base cible, recevoir, par le terminal, le premier rapport de statut envoyé par la station de base source,
l'indication d'accès étant utilisée pour indiquer, à la station de base source, que le terminal a accédé de manière satisfaisante à la station de base cible.

8. Procédé selon la revendication 6, consistant en outre à :
dans le processus de transfert, envoyer, par le terminal, une indication de transfert à la station de base source, l'indication de transfert étant utilisée pour indiquer que le terminal a interrompu ou est sur le point d'interrompre une connexion avec la station de base source,
dans lequel, dans le processus de transfert, quand le maintien de la transmission de données d'utilisateur entre la station de base source et le terminal est arrêté, la réception (303'), par le terminal, d'un premier rapport de statut envoyé par la station de base source, consiste spécifiquement à :
dans le processus de transfert, recevoir, par le terminal, le premier rapport de statut envoyé par la station de base source sur la base de l'indication de transfert.

9. Station de base (500), comprenant :
une unité d'envoi (501), configurée pour envoyer une commande de transfert à un terminal, la commande de transfert étant utilisée pour déclencher un processus de transfert du terminal depuis la station de base à une station de base cible ; et
une unité de traitement (502), configurée pour maintenir une transmission de données d'utilisateur entre la station de base et le terminal,
la station de base étant **caractérisée en ce que** :
l'unité d'envoi (501) est en outre configurée pour : dans le processus de transfert, quand le maintien de la transmission de données d'utilisateur entre la station de base et le terminal est arrêté, envoyer un premier rapport de statut au terminal, le premier rapport de statut étant utilisé pour indiquer, au terminal, un statut de réception de données en liaison montante du terminal par la station de base.

10. Station de base selon la revendication 9, comprenant en outre :
une unité de réception (503), configurée pour : dans le processus de transfert, recevoir une indication d'accès envoyée par la station de base cible, l'indication d'accès étant utilisée pour indiquer que le terminal a accédé de manière satisfaisante à la station de base cible, l'unité d'envoi (501) étant spécifiquement configurée pour : dans le processus de transfert, quand l'unité de réception (503) reçoit l'indication d'accès envoyée par la station de base cible, envoyer le premier rapport de statut au terminal.

11. Station de base selon la revendication 9, comprenant en outre :
une unité de réception (503), configurée pour : dans le processus de transfert, recevoir une indication de transfert envoyée par le terminal, l'indication de transfert étant utilisée pour indiquer que le terminal a interrompu ou est sur le point d'interrompre une connexion avec la station de base,
l'unité d'envoi (501) étant spécifiquement configurée pour :
dans le processus de transfert, quand l'unité de réception (503) reçoit l'indication de transfert envoyée par le terminal, envoyer le premier rapport de statut au terminal.

12. Station de base selon la revendication 11, dans laquelle, après la réception de l'indication de transfert envoyée par le terminal, l'unité de réception (503) est en outre configurée pour :
recevoir un second rapport de statut envoyé par le terminal, le second rapport de statut étant utilisé pour indiquer, à la station de base, un statut de réception de données en liaison descendante par le terminal.

13. Station de base selon l'une quelconque des revendications 9 à 11, dans laquelle, après l'envoi du premier rapport de statut au terminal, l'unité d'envoi (501) est en outre configurée pour :
envoyer une information de transfert de statut de numéro de séquence à la station de base cible, l'information de transfert de statut de numéro de séquence étant utilisée pour indiquer, à la station de base cible, un statut d'obtention de données en liaison montante du terminal par la station de base ; et
transférer les données en liaison montante obtenues du terminal à la station de base cible.

14. Terminal (600), comprenant :
une unité de réception (601), conçue pour recevoir une commande de transfert envoyée par une station de base source ; et
une unité de traitement (602), configurée pour : sur la base de la commande de transfert, déclencher un processus de transfert de la station de base source à une station de base cible, et maintenir une transmission de données d'utilisateur avec la station de base source,
le terminal étant **caractérisé en ce que** :
l'unité de réception (601) est en outre configurée pour : dans le processus de transfert, quand le maintien de la transmission de données d'utilisateur entre la station de base source et le terminal est arrêté, recevoir un premier rapport de statut envoyé par la station de base source, le premier rapport de statut étant utilisé pour indiquer, au terminal, un statut de réception de données en liaison montante du terminal par la station de base source.

15. Terminal selon la revendication 14, dans lequel, dans le processus de transfert, quand le maintien de la transmission de données d'utilisateur entre la station de base source et le terminal est arrêté, l'unité de réception (601) est spécifiquement configurée pour :
dans le processus de transfert, quand la station de base source reçoit une indication d'accès envoyée par la station de base cible, recevoir le premier rapport de statut envoyé par la station de base source,
l'indication d'accès étant utilisée pour indiquer, à la station de base source, que le terminal a accédé de manière satisfaisante à la station de base cible.

16. Terminal selon la revendication 14,
comprenant en outre unité d'envoi (605) configurée pour : dans le processus de transfert, envoyer une indication de transfert à la station de base source, l'indication de transfert étant utilisée pour indiquer que le terminal a interrompu ou est sur le point d'interrompre une connexion avec la station de base,
le terminal recevant, dans le processus de transfert, quand le maintien de la transmission de données d'utilisateur entre la station de base source et le terminal est arrêté, le premier rapport de statut envoyé par la station de base source, et l'unité de réception (601) étant spécifiquement configurée pour :
dans le processus de transfert, recevoir le premier rapport de statut envoyé par la station de base source sur la base de l'indication de transfert.
